# EUROPEAN PATENT APPLICATION

(11) **EP 4 194 937 A1**
(43) Date of publication of application: **14.06.2023**
(21) Application number: 21213794.7
(22) Date of filing: 10.12.2021
(51) Int. Cl.: G02F 1/01, G02F 1/19

(54) **OPTICAL ELEMENT**

(71) Applicant: ASML Netherlands B.V., 5500 AH Veldhoven (NL)
(72) Inventor: VAN ZWOL, Adriaan, Roelof, 5500 AH Veldhoven (NL); WANG, Jiun-Cheng, 5500 AH Veldhoven (NL); NIENHUYS, Han-Kwang, 5500 AH Veldhoven (NL)
(74) Representative: ASML Netherlands B.V.

(57) **Abstract**

An optical element comprising a temperature-sensitive layer, the temperature-sensitive layer configured to: increase in temperature, due to heat received from a laser beam; and transition from a first state to a second state at or above a threshold temperature, wherein: in the first state, the temperature-sensitive layer is substantially reflective at a first wavelength and in the second state the temperature-sensitive layer is substantially non-reflective at the first wavelength; or in the first state, the temperature-sensitive layer is substantially non-reflective at the first wavelength and in the second state the temperature-sensitive layer is substantially reflective at the first wavelength; and the transition from the first state to the second state occurs over less than a microsecond.

## Description

### FIELD

The present invention relates to an optical element. In particular, but not exclusively, it relates to an optical element for preventing back-reflections from reaching a seed laser. The optical element may be used in a lithographic apparatus, for example in a radiation source of an EUV lithographic apparatus.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern at a patterning device (e.g., a mask) onto a layer of radiation-sensitive material (resist) provided on a substrate.

To project a pattern on a substrate a lithographic apparatus may use electromagnetic radiation. The wavelength of this radiation determines the minimum size of features which can be formed on the substrate. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

A type of EUV radiation source used to generate EUV radiation for use in a lithographic apparatus is a laser-produced plasma (LPP) source. In the LPP source, a high-power laser, e.g. a CO2-laser, illuminates mass-limited targets, e.g. droplets of tin, with pulses of radiation. Each target is converted into plasma that produces EUV radiation upon the plasma's free electrons recombining with the plasma's ions. The EUV radiation thus produced is used in a lithographic apparatus to image a pattern via projection optics onto a semiconductor wafer. The desired power of EUV radiation is increasing with time and, as such, the power of pulsed radiation required from the high-power laser is increasing.

Pulses of radiation from the high-power laser may be generated by one or more seed lasers and then propagated through one or more power amplifiers, so as to increase the power of each pulse, before being incident upon the targets. While the majority each pulse is used for conditioning the target and/or converting the target into a plasma, at least a portion of the pulse is typically back-reflected from the target. Such back-reflected portions of radiation (referred to as back-reflections) can propagate back through the power amplifiers, thereby increasing the power of the back-reflections, and propagate towards the seed laser(s). Radiation entering a seed laser negatively affects the laser, for example damaging the laser, and may result in power fluctuations, reduced efficiency, increased maintenance time etc. Therefore, it is desirable to prevent radiation, such as back-reflections, from entering a seed laser.

A known method for preventing back-reflections from entering the seed laser utilizes polarization. In particular, the polarization of the pulses of radiation and/or the back-reflections are controlled and a polarizing filter is provided at the seed laser aperture so as to inhibit back-reflections from entering the seed laser. However, polarizing filters typically do not block 100% of radiation incident upon them, especially when exposed to high power radiation. Rather, there may be some leakage through the polarizing filter. Additional apparatus, for example chromatic filtering using a Brewster stack and/or Fabry Perot etalon may be used in addition to polarization control so as to block radiation which leaks through the polarization filter. However, such apparatus are also sensitive to high power radiation and can leak radiation through to the seed laser and/or become damaged themselves.

It is an aim of the present invention to provide systems and methods that address one or more of the problems described above.

### SUMMARY

According to a first aspect of the invention, there is provided an optical element comprising a temperature-sensitive layer, the temperature-sensitive layer configured to: increase in temperature, due to heat received from a laser beam; and transition from a first state to a second state at or above a threshold temperature. In the first state, the temperature-sensitive layer is substantially reflective at a first wavelength and in the second state the temperature-sensitive layer is substantially non-reflective at the first wavelength; or in the first state, the temperature-sensitive layer is substantially non-reflective at the first wavelength and in the second state the temperature-sensitive layer is substantially reflective at the first wavelength. The transition from the first state to the second state occurs over less than a microsecond.

In an optical system it is desirable to direct desired radiation, for example a forward propagating laser beam, around the optical system. However, some radiation propagating around the optical system may be undesired, for example a back-reflection of said laser beam. Such undesired radiation can cause damage to apparatus or optical elements if permitted to freely travel about the optical system. In particular, if back-reflected laser beam radiation re-enters a laser (i.e. a seed laser which generates the laser beam radiation), it can cause damage to the laser. This issue is particularly prevalent when the laser beam radiation is being amplified because back-reflections may also be amplified, thereby causing more damage.

By providing an optical element with a temperature-sensitive layer which can transition from a first state to a second state, laser beam radiation can be selectively permitted to propagate further within an optical system or selectively blocked from further propagation, based on which state the temperature-sensitive layer is in.

The optical element may be arranged such that, in one of the first or second states, the laser beam radiation is permitted to propagate between a laser generating the laser beam radiation and a source of back-reflections in an optical system via the optical element. The state of the temperature-sensitive layer in which laser beam radiation is permitted to propagate between the laser and the other point via the optical element can be referred to as an 'open' state. In the other of the first or second states, laser beam radiation is not permitted to propagate between the laser and the source of back-reflections via the optical element. For example, in the other of the first or second states, laser beam radiation being transmitted or reflected by the optical element can be directed to a beam dump or other blocking means, thereby blocking its onward propagation. Alternatively, the temperature-sensitive layer may absorb the laser beam radiation, thereby prohibiting its onward propagation to the laser and/or the source of back-reflections. The state of the temperature-sensitive layer in which laser beam radiation is not permitted to propagate between the laser and the other point via the optical element may be referred to as a 'closed' state.

The first state may be substantially reflective and the second state may be substantially transmissive, or the first state may be substantially transmissive and the second state may be substantially reflective. The first state may be substantially reflective and the second state may be substantially absorptive, or the first state may be substantially absorptive and the second state may be substantially reflective.

The temperature-sensitive layer has optical properties which are responsive to temperature change. The increase in temperature is initiated due to incident radiation from a received laser beam. That is, an incident laser beam radiation imparts energy in the form of heat to the temperature-sensitive layer thereby leading to a change in temperature of the temperature-sensitive layer. The temperature change results in the transition from a first state, with first optical properties, to a second state, with second optical properties. An optical element which can transition between a first state and a second state due to a temperature change as described can be referred to as a thermo-optical switch. The heat received from the radiation can include heat due to absorption of radiation by the temperature-sensitive layer. The heat received from the radiation can also include heat conducted from adjacent components of the optical element (e.g. a substrate of the optical element) which has received heat from the radiation (e.g. by absorbing the radiation).

The transition from the first state to the second state may occur over less than a microsecond. The transition may occur over less than 500 nanoseconds, for example 400 nanoseconds. By providing an optical element which transitions on a fast timescale (i.e. less than a microsecond), the optical element can be highly responsive to changes in radiation incident upon the temperature-sensitive layer, thereby providing fast and responsive control over the propagation or blocking of desired or undesired radiation. Alternative optical elements which transition due to temperature changes typically experience transition times of multiple microseconds, milliseconds or longer.

Substantially reflective is intended to mean that a major portion of the radiation is reflected from the temperature-sensitive layer. The major portion may be greater than around 90%. Similarly, substantially non-reflective is intended to mean that a major portion of the radiation is not reflected. The major portion may be greater than around 90%. That is, the temperature-sensitive layer may transition from reflecting at least 90% of the laser beam radiation to reflecting 10% or less than 10% of the laser beam radiation, or from reflecting 10% or less than 10% of the laser beam radiation to reflecting at least 90% of the laser beam radiation.

The received laser beam may comprise laser beam radiation of the first wavelength. The increase in temperature may be due to the laser beam radiation of the first wavelength. The optical element may hence receive laser beam radiation of the first wavelength and transition from the first to the second state due to heat received from the received laser beam radiation of the first wavelength. This may be referred to as a passive embodiment, wherein the radiation to be blocked or permitted actuates the transition between open and closed states.

The received laser beam may comprise laser beam radiation of a second wavelength. In one embodiment, the received laser beam may comprise a further laser beam radiation of a second wavelength. In any case, the increase in temperature may be due to the laser beam radiation of the second wavelength. The increase in temperature may be due to laser beam radiation of the first and second wavelength, i.e. there may be a contribution from both the first and second wavelength laser beams. The optical element may hence receive laser beam radiation of the first wavelength, but transition from the first to the second state at least partly due to heat received from received laser beam radiation of the second wavelength. This may be referred to as an active embodiment, wherein a laser beam separate to the radiation to be blocked or permitted actuates the transition between open and closed states. An active embodiment may give increased control over the occurrence and timing of the transition. The laser beam radiation of the second wavelength may be referred to as a pump laser beam or heating laser beam. The radiation of the second wavelength may be generated by a pump laser, also referred to as a heating laser.

The laser beam may be suitable for converting a target into a plasma upon illuminating the target. That is, radiation of the first and/or second wavelength may be suitable for converting a target into a plasma upon illuminating the target. The target may be a fuel droplet. The fuel droplet may be a metal droplet, for example a tin droplet. The laser beam may be pulsed.

The first wavelength may be in the infra-red range. The first wavelength may be longer than 700 nm. The first wavelength may be less than 1 mm. The first wavelength may be, for example, 1 micron. Preferably, first wavelength may be in the long infra-red range. Infra-red radiation is suitable for converting a target into a plasma upon illuminating the target. It has previously been difficult to achieve fast thermo-optical switching for radiation in the infra-red range, and in particular in the long infra-red range. The second wavelength may also be in the infra-red range. For example, the second wavelength may be, for example, 1 micron.

The first wavelength may be in the long infra-red range. The long infra-red range is a sub-range of the infra-red range. The first wavelength may be longer than 8 micron. The first wavelength may be less than 15 micron. The first wavelength may be, for example, around 10 micron, e.g. 10.2 micron or 10.6 micron. Long infra-red radiation is particularly suitable for converting a target into a plasma upon illuminating the target. It has previously been difficult to achieve fast thermo-optical switching for radiation in the long infra-red range. The second wavelength may also be in the long infra-red range.

The laser beam may have a power greater than 1 kW. The laser beam may have a power of 30 kW. The laser beam may have a power of greater than 30 kW, for example 50 kW. The transition from the first state to the second state can be particularly responsive to high power radiation because this may result in a greater and/or faster temperature change and hence a faster transition. As such, the optical element is particularly suited for inhibiting high powers of unwanted radiation, which can cause significant damage, from freely travelling about an optical system. Previous systems for selectively blocking propagation of unwanted radiation utilize polarization. Such systems which utilize polarization typically have a reduced efficacy at high powers (i.e. greater than 1 kW, and in particular at or above 30 kW). Laser beam radiation with said high powers may be particularly suitable for converting a target into a plasma upon illuminating the target.

The temperature-sensitive layer may comprise alternating layers of high and low refractive index media. That is, the temperature-sensitive layer may comprise a plurality of layers of a first medium with a first refractive index and a plurality of layers of a second medium with a second refractive index disposed between the plurality of layers of the first medium, and wherein the first refractive index is significantly higher or significantly lower than the second refractive index. The alternating layers (i.e. layers of the first and/or second media) may be referred to as sub-layers. Such a combination of sub-layers may exhibit a significant and fast (i.e. sub-microsecond) transition between first and second states upon being heated. Therefore, these materials can provide fast thermo-optical switching.

Furthermore, a temperature-sensitive layer comprising such sub-layers can withstand high powers of radiation, for example up to and in excess of 30 kW, without experiencing significant damage (e.g. delaminating). As such, an optical element comprising a temperature-sensitive layer comprising alternating layers of high and low refractive index media can provide an fast thermo-optical switching apparatus which can withstand high powers, for example those experienced in some lithographic apparatuses.

The first and/or second medium may comprise, for example, zinc selenide (ZnSe), thorium fluoride (ThFx, for example thorium tetrafluoride ThF4), zinc sulfide (ZnS), diamond, silicon (Si), germanium (Ge), ytterbium fluoride (YbFx), barium fluoride (BaFx), or any other known optical coating, or any combination thereof. The first and/or second medium may be doped.

The temperature-sensitive layer may have a thickness of less than 100 micron. The thickness may be, for example, less than 60 micron. The thickness may be, for example, approximately 30 micron or approximately 50 micron. The thickness may be selected based upon the wavelength of radiation to be received by the optical element. By changing the layer thickness, the wavelength response (e.g. the reflectivity, absorption and/or transmission spectrum) of the temperature-sensitive layer can be tuned.

Alternatively, the wavelength response of the temperature-sensitive layer can be tuned based upon the angle of incidence of the radiation with respect the surface of the temperature-sensitive layer.

One of the first state or second state may be substantially reflective and the other of the first state or second state may be substantially transmissive. That is, the temperature-sensitive layer may transition between acting as a mirror and an optical window or a lens.

One of the first state or second state may be substantially reflective and the other of the first state or second state may be substantially absorptive. That is, the temperature-sensitive layer may transition between acting as a mirror and a beam blocking element (e.g. a beam dump or filter).

The temperature-sensitive layer may be further configured to, following the transition from the first state to the second state, remain in the second state for at least a microsecond before returning to the first state. For example, the temperature-sensitive layer may remain in the second state for over 3 microseconds. There is a temporal delay between desired radiation interacting with the optical element and a back-reflection (which occurs downstream of the optical element) interacting with the optical element. As such, by providing a temperature-sensitive layer which remains in the second state for a significant period of time can ensure that the optical element remains in a closed state long enough to block said back-reflection. Without the ability to remain in the second state for an extended period of time, an optical element may close (thereby blocking radiation) but re-open before the back-reflection reaches the optical element, thereby permitting onward propagation of undesired radiation.

The optical element may further comprise a substrate supporting the temperature-sensitive layer. A substrate comprising supporting the temperature-sensitive layer has been advantageously been found to encourage a fast transition from the first state to the second state.

The substrate may have a thermal conductivity lower than the thermal conductivity of the temperature-sensitive layer. Beneficially, by having a substrate with a lower thermal conductivity compared to the temperature-sensitive layer, the temperature-sensitive layer may heat faster, thereby leading to a faster transition.

The substrate may comprise zinc selenide. A substrate comprising zinc selenide has been advantageously found to substantially increase the transition speed of the temperature-sensitive layer.

The threshold temperature may be more than 20 °C above a normal operating temperature of the optical element. The normal operating temperature may be the ambient temperature of an environment in which the optical element is located. Alternatively the normal operating temperature may be higher than the ambient temperature of the environment containing the optical element, for example due to radiation incident upon the optical element in normal use. The operating temperature may be room temperature, for example around 20 ± 2 °C. The operating temperature may be for example 40 °C.

The threshold temperature may be less than or equal to 100 °C above the normal operating temperature of the optical element. The threshold temperature being less than or equal to 100 °C may be advantageous because this can provide adequate switching properties without risking damage to the temperature-sensitive layer or other components of the optical element (e.g. delamination between the temperature-sensitive layer and a substrate) which can occur at higher temperatures.

According to a second aspect of the invention there is provided a thermo-optical switching apparatus comprising: the optical element of the first aspect; and a heating laser configured to illuminate the temperature-sensitive layer with laser beam radiation of the second wavelength. The apparatus may be used in a system comprising a seed laser configured to generate laser beam radiation of the first wavelength, wherein the seed laser is arranged to direct radiation to the optical element. The radiation of the first wavelength may be used elsewhere in the system. The heating laser may be solely used for modifying the temperature of the temperature-sensitive layer. That is, the radiation of the second wavelength can be directed to the temperature sensitive layer and then blocked from onward propagation, either by being absorbed by the layer or by being reflected by the layer and then blocked e.g. using a beam dump. The heating laser may be referred to as a pump laser. The laser beam radiation of the second wavelength may be referred to as heating radiation or a heating laser beam, pump radiation or a pump laser beam.

The heating laser may generate pulsed radiation. The laser beam radiation of the first wavelength may comprise pulsed radiation generated by a seed laser. The heating laser and seed laser may be synchronized. The heating laser may comprise a pulsed laser with a heating repetition rate. The seed laser may also be a pulsed laser with a seed repetition rate. The heating laser and seed laser may be synchronized such that the heating repetition rate is equal to the seed repetition rate.

According to a third aspect of the invention there is provided a thermo-optical switching apparatus comprising the optical element of the first aspect, and means for cooling or heating the temperature-sensitive layer. By providing controlled cooling or heating of the temperature-sensitive layer, the amount of time the temperature-sensitive layer spends in the first and/or second state can be controlled. Such cooling or heating means may ensure that the temperature-sensitive layer is at a desired temperature (e.g. a consistent normal operating temperature) upon arrival of the laser beam. In this way, a more consistent increase in temperature can be achieved upon receipt of the laser beam. The means for cooling may comprise, for example, a flowing cooling fluid provided within the optical apparatus. The means for cooling may comprise a connection to a heat sink. The means for heating may comprise a Peltier heater. Features of the third aspect may be combined with the second aspect.

According to a fourth aspect of the invention there is provided an EUV source comprising the optical element of the first aspect or the thermo-optical switching apparatus of the second or third aspect. The optical element and/or optical switching apparatus may be particularly suited for use in an EUV source because it is typically beneficial to control the travel of unwanted radiation. In particular, a type of EUV source utilizes a pulsed seed laser which can experience significant damage if unwanted radiation, e.g. from back-reflections, enter the seed laser. However, pulses of radiation from the seed laser are desired radiation and it is desirable for them to be directed to desired locations. The relevant times for pulses of radiation are typically short e.g. less than a microsecond. As such, a fast thermo-optical switching apparatus, including an optical element, as described herein provides means for permitting travel of the desired pulses of radiation and blocking undesired back-reflections on the fast timescales required. Furthermore, the optical elements described herein can withstand high powers such as those present in an EUV source. For example, an EUV source may use radiation with powers up to and including 30 kW.

According to a fifth aspect of the invention there is provided a method of selectively permitting and/or blocking radiation of a first wavelength comprising providing an optical element comprising a temperature-sensitive layer in the path of said radiation of the first wavelength, wherein the temperature-sensitive layer is configured to transition from a first state to a second state at or above a threshold temperature, wherein the transition occurs over less than a microsecond, wherein: in the first state, the temperature-sensitive layer is substantially reflective at the first wavelength and in the second state the temperature-sensitive layer is substantially non-reflective at the first wavelength; or in the first state, the temperature-sensitive layer is substantially non-reflective at the first wavelength and in the second state the temperature-sensitive layer is substantially reflective at the first wavelength. The method further comprises illuminating the optical element with laser beam radiation; and increasing the temperature of the temperature-sensitive layer to above the threshold temperature.

The laser beam radiation may be radiation of the first wavelength. Alternatively, the laser beam radiation may be separate to the radiation of the first wavelength, for example it may be radiation of a second wavelength generated by a different laser.

The optical element is provided may be provided in an EUV radiation source, the method further comprising: generating a pulse of laser beam radiation of the first wavelength in the EUV radiation source; directing the pulse of laser beam radiation of the first wavelength to the optical element; and increasing the temperature of the temperature-sensitive layer during and/or following the pulse of laser beam radiation of the first wavelength interacting with the optical element.

The temperature of the temperature-sensitive layer may be increased as the pulse of radiation interacts with (e.g. is absorbed, transmitted or reflected by) the temperature-sensitive layer of the optical element. The temperature of the layer may be increased after the pulse of radiation interacts with the temperature-sensitive layer of the optical element. As such, the optical element transitions from an open to closed state, or closed to open state, during or after the pulse of radiation has interacted with the optical element.

The laser beam radiation may be generated by, for example, a seed laser. In EUV radiation sources, back-reflections can cause damage to the seed laser. It is therefore desired to permit an initial pulse of radiation to travel through the EUV radiation source, but block back-reflections from traveling back to the laser. The transition of the temperature-sensitive layer can be timed so as to permit onwards travel of the pulse of radiation, but block back-reflections. By increasing the temperature of the temperature-sensitive layer during and/or following the pulse of radiation interacting with the optical element, the transition can be timed so as to not occur until the pulse (or at least a majority thereof) has passed through (or been reflected by) the optical element. The optical element will then remain in the second state such that any back-reflections can be blocked.

The method may further comprise generating a pulse of laser beam radiation of a second wavelength in the EUV radiation source; and directing the pulse of laser beam radiation of a second wavelength to the optical element during and/or following the pulse of laser beam radiation of the first wavelength interacting with the optical element.

The optical element may hence receive laser beam radiation of the first wavelength, but transition from the first to the second state due to heat received from received laser beam radiation of the second wavelength. This may be referred to as an active embodiment, wherein a laser beam separate to the radiation to be blocked or permitted actuates the transition between open and closed states. An active embodiment may beneficially give increased control over the occurrence and timing of the transition. The laser beam radiation of the second wavelength may be referred to as a pump laser beam, heating laser beam, pump radiation or heating radiation. The pulse of heating radiation may be generated by a pump laser, also referred to as a heating laser. The pump laser and the laser generating the pulse of laser beam radiation of the first wavelength may be synchronized. However, the arrival time of the pulse of heating radiation may be delayed with respect the pulse of laser beam radiation of the first wavelength.

### BRIEF DESCRIPTION OF THE DRAWINGS

Embodiments of the invention will now be described, by way of example only, with reference to the accompanying schematic drawings, in which:
- Figure 1 schematically depicts a lithographic system comprising a lithographic apparatus and a radiation source according to an embodiment of the invention;
- Figure 2 shows a simplified schematic view of an example laser system according to an embodiment of the invention;
- Figures 3A and 3B schematically illustrate an example optical element which may form part of the laser system;
- Figures 4A-4C depict the optical element of Figures 3A and 3B used in an active embodiment;
- Figures 5A and 5B schematically illustrate an optical element which is typically reflective and which may form part of the laser system;
- Figures 6A and 6B depict optical spectra of a temperature-sensitive layer comprising a 50 µm layer of ThF₄/ZnSe sub-layers; and
- Figure 7 depicts the temperature change of a 30 µm layer of ThF₄/ZnSe sub-layers on different substrates.

### DETAILED DESCRIPTION

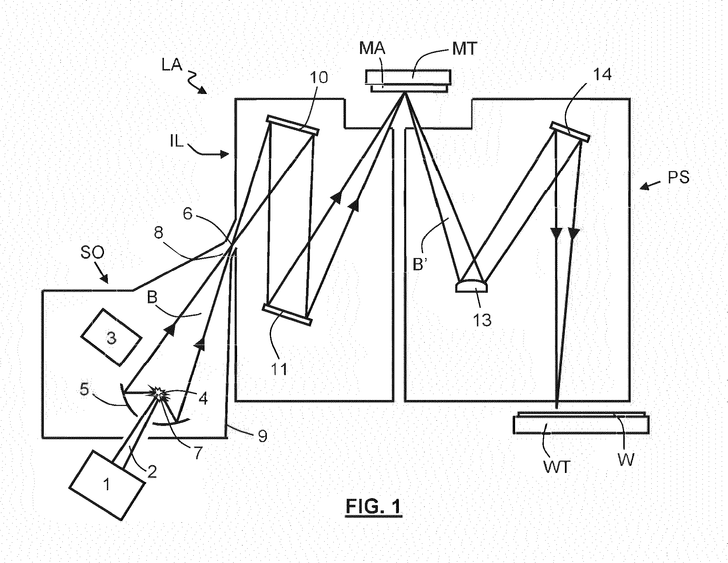

Figure 1 shows a lithographic system comprising a radiation source SO and a lithographic apparatus LA. The radiation source SO is configured to generate an EUV radiation beam B and to supply the EUV radiation beam B to the lithographic apparatus LA. The lithographic apparatus LA comprises an illumination system IL, a support structure MT configured to support a patterning device MA (e.g., a mask), a projection system PS and a substrate table WT configured to support a substrate W.

The illumination system IL is configured to condition the EUV radiation beam B before the EUV radiation beam B is incident upon the patterning device MA. Thereto, the illumination system IL may include a facetted field mirror device 10 and a facetted pupil mirror device 11. The faceted field mirror device 10 and faceted pupil mirror device 11 together provide the EUV radiation beam B with a desired cross-sectional shape and a desired intensity distribution. The illumination system IL may include other mirrors or devices in addition to, or instead of, the faceted field mirror device 10 and faceted pupil mirror device 11.

After being thus conditioned, the EUV radiation beam B interacts with the patterning device MA. As a result of this interaction, a patterned EUV radiation beam B' is generated. The projection system PS is configured to project the patterned EUV radiation beam B' onto the substrate W. For that purpose, the projection system PS may comprise a plurality of mirrors 13,14 which are configured to project the patterned EUV radiation beam B' onto the substrate W held by the substrate table WT. The projection system PS may apply a reduction factor to the patterned EUV radiation beam B', thus forming an image with features that are smaller than corresponding features on the patterning device MA. For example, a reduction factor of 4 or 8 may be applied. Although the projection system PS is illustrated as having only two mirrors 13, 14 in Figure 1, the projection system PS may include a different number of mirrors (e.g., six or eight mirrors).

The substrate W may include previously formed patterns. Where this is the case, the lithographic apparatus LA aligns the image, formed by the patterned EUV radiation beam B', with a pattern previously formed on the substrate W.

A relative vacuum, i.e. a small amount of gas (e.g. hydrogen) at a pressure well below atmospheric pressure, may be provided in the radiation source SO, in the illumination system IL, and/or in the projection system PS.

The radiation source SO shown in Figure 1 is, for example, of a type which may be referred to as a laser produced plasma (LPP) source. A laser system 1 according to an embodiment of the invention is depicted. The laser system 1, which may, for example, include a seed laser (not shown) such as a CO₂ laser, is arranged to deposit energy via a laser beam 2 into a fuel, such as tin (Sn) which is provided from, e.g., a fuel emitter 3. Although tin is referred to in the following description, any suitable fuel may be used. The fuel may, for example, be in liquid form, and may, for example, be a metal or alloy. The fuel emitter 3 may comprise a nozzle configured to direct tin, e.g. in the form of droplets, along a trajectory towards a plasma formation region 4. The laser beam 2 is incident upon the tin at the plasma formation region 4. The deposition of laser energy into the tin creates a tin plasma 7 at the plasma formation region 4. Radiation, including EUV radiation, is emitted from the plasma 7 during de-excitation and recombination of electrons with ions of the plasma. The laser beam 2 generated by the laser system 1 comprises pulsed radiation. In particular, the laser system 1 generates a pre-pulse (PP) configured to condition the fuel droplet for receipt of a main pulse (MP) of radiation, where the MP is configured to convert the fuel droplet into a plasma.

The EUV radiation from the plasma is collected and focused by a collector 5. Collector 5 comprises, for example, a near-normal incidence radiation collector 5 (sometimes referred to more generally as a normal-incidence radiation collector). The collector 5 may have a multilayer mirror structure which is arranged to reflect EUV radiation (e.g., EUV radiation having a desired wavelength such as 13.5 nm). The collector 5 may have an ellipsoidal configuration, having two focal points. A first one of the focal points may be at the plasma formation region 4, and a second one of the focal points may be at an intermediate focus 6, as discussed below.

The laser system 1 may be spatially separated from the radiation source SO. Where this is the case, the laser beam 2 may be passed from the laser system 1 to the radiation source SO with the aid of a beam delivery system (not shown) comprising, for example, suitable directing mirrors and/or a beam expander, and/or other optics. The laser system 1, the radiation source SO and the beam delivery system may together be considered to be a radiation system.

Radiation that is reflected by the collector 5 forms the EUV radiation beam B. The EUV radiation beam B is focused at intermediate focus 6 to form an image at the intermediate focus 6 of the plasma present at the plasma formation region 4. The image at the intermediate focus 6 acts as a virtual radiation source for the illumination system IL. The radiation source SO is arranged such that the intermediate focus 6 is located at or near to an opening 8 in an enclosing structure 9 of the radiation source SO.

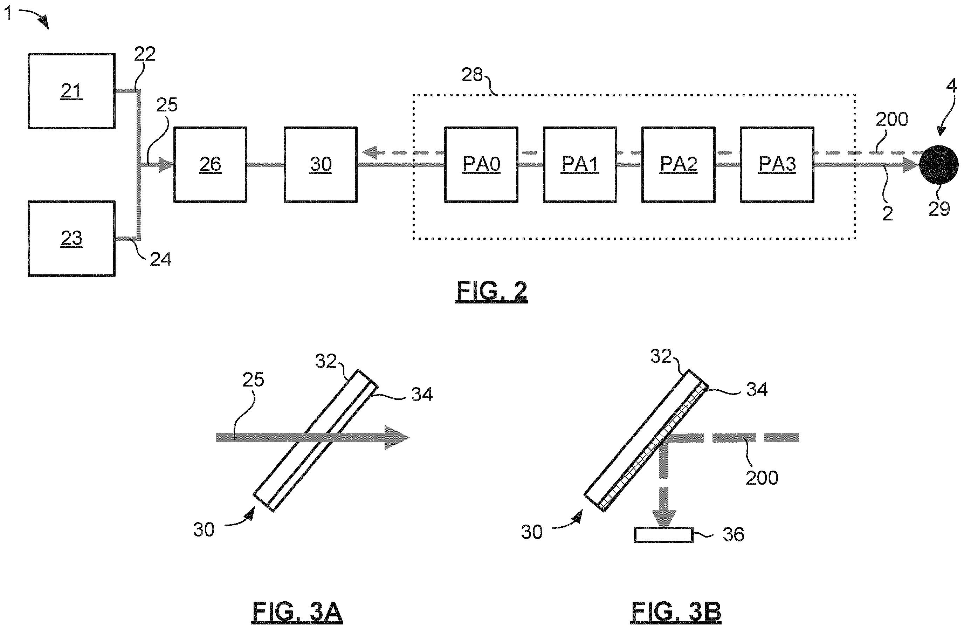

Figure 2 shows a simplified schematic view of an example laser system 1 according to an embodiment of the invention. The laser system may be the laser system 1 in the LPP EUV source SO of Figure 1. The laser system 1 comprises a pre-pulse (PP) seed laser 21, referred to as a PP seed laser 21, and a main pulse (MP) seed laser 23, referred to as a MP seed laser. The PP seed laser 21 generates pulses of PP radiation in a PP beam 22 and the MP seed laser 23 generates pulses of MP radiation in a MP beam 24. In figure 2, a single beam or a collinear laser beam 25 is depicted for helping the understanding of the invention. The collinear laser beam 25 may be either the PP or the MP when they are directed to the plasma formation region 4. Depending upon the particular configuration desired, optical components may include such elements as lenses, filters, prisms, mirrors or any other element which may be used to direct the beams 22, 24, 25 in a desired direction.

The laser system 1 comprises a pre-amplifier 26 configured to increase the power of the collinear laser beam 25. After being pre-amplified, the collinear laser beam is passed through an amplification chain 28 comprising multiple amplification modules PA0, PA1, PA2, PA3. Each amplification module PA0 takes an input pulse from the collinear laser beam 25 and amplifies it in power, such that the pulse output from the final amplification module PA3 is significantly higher in power than the initial input pulse. For example, amplifiers could provide gain of 100% or 200%. Therefore, if the MP is a 1KW pulse, the amplified MP at the output of PA3 may be around between 20KW and 30KW. In one embodiment all amplifiers may comprise the same gain. In other embodiments, each PA may have different gain. Such amplification magnification values are illustrative in nature and any magnitudes of amplification may be used.

The output from the amplification chain 28 comprises amplified pulses in a laser beam, and forms the laser beam 2 generated by the laser system 1 as described previously with reference to Figure 1. The laser beam 2 hence comprises amplified pulses of PP and MP radiation. The laser beam 2 illuminates a fuel droplet 29 (e.g. a tin droplet) at the plasma formation region 4, thereby generating EUV radiation. However, some radiation is back-reflected from the droplet 29, forming pulses of back-reflected radiation referred to as back-reflections 200. The plasma formation region 4 may therefore be referred to as a source of back-reflections 200 (when a reflective medium such as a droplet 29 is present in the plasma formation region 4). Said back-reflections 200 propagate backwards through the laser system 1 i.e. upstream through the amplification chain 28. As such, the power of the back-reflections 200 are amplified by the amplification modules PA0-3. For example, an initial back-reflection pulse may have a small power (e.g. 1 W) but may be amplified to significantly higher powers (e.g. 1 kW) after passing through the fourth, third, second and first amplification modules PA3, PA2, PA1, PA0 sequentially. In this way, back-reflections 200 can cause significant damage to the seed lasers 21, 23 if permitted to propagate towards and into the seed lasers 21, 23.

The laser system 1 also comprises an optical element 30 configured to reduce the effect of back-reflections 200. In particular, the optical element is configured to permit propagation of the collinear laser beam 25 in a forwards direction (i.e. from the seed lasers 21, 23 towards the plasma formation region 4) and block propagation of back-reflections 200 in a backwards direction (i.e. from the plasma formation region 4 towards the seed lasers 21, 23). The collinear laser beam 25 may be considered desired radiation, for example because it is desirable for this radiation to propagate through the laser system 1, into the main chamber of the radiation source SO, and illuminate a droplet 29 at the plasma formation region 4. The back-reflections 200, on the other hand, may be considered undesired radiation, for example because it has no beneficial purpose yet may disadvantageously damage the seed lasers 21, 23.

Figures 3A and 3B schematically illustrate an example optical element 30. The optical element 30 is configured to permit the transmission of desired radiation and block the transmission of undesired radiation. The optical element 30 comprises a substrate 32. The substrate 32 is optically transmissive at the wavelength of the collinear laser beam 25. The substrate 32 may be, for example, a lens or other transmissive focusing element, such that the optical element 30 itself acts as a lens.

The optical element 30 further comprises a temperature-sensitive layer 34 which may be applied as a thin film to the substrate 32. The composition and thickness of the temperature-sensitive layer 34 is described in more detail below, however in general the temperature-sensitive layer 34 comprises multiple individual layers which together act as a type of optical filter. The temperature-sensitive layer 34 may be referred to simply as a layer 34. The individual layers which form the layer 34 may be referred to as sub-layers. The invention can be implemented without a substrate 32, by providing a temperature-sensitive layer 34 in isolation, but it should be understood that it may be beneficial to mount the temperature-sensitive layer 34 on a substrate 32, e.g. as a coating, for example to improve the strength and/or thermal properties of the optical element 30. Furthermore, if used, the substrate 32 need not have any focusing power such that the optical element 30 acts as an optical window.

The optical element 30 is used in an environment (e.g. in the laser system 1) which is typically held at an ambient temperature. The ambient temperature may be, for example, room temperature, i.e. around 20 °C (±, for example, 2 °C). However, in other examples the ambient temperature may be different, for example an ambient temperature of 0 °C may be used. When used in this environment, the optical element 30 (and the temperature-sensitive layer 34 thereof) operates at a normal operating temperature. The normal operating temperature may be the same as the ambient temperature. Alternatively, for example because the optical element 30 frequently has radiation incident upon it in normal use, a portion of which will typically be absorbed, the normal operating temperature may be higher than the ambient temperature. The normal operating temperature may be, for example, more than 20 °C, for example up to 40 °C or up to 80 °C.

The temperature-sensitive layer 34 is optically transmissive at the wavelength of the collinear laser beam 25 when operating at a normal operating temperature. Figure 3A depicts the optical element 30 at a normal operating temperature, wherein the temperature-sensitive layer 34 is transmissive. In Figure 3A, the temperature-sensitive layer 34 is depicted by a white box, indicating that it is transmissive at the wavelength of the collinear laser beam 25 at the normal operating temperature. In this state, the collinear laser beam 25 is transmitted through the temperature-sensitive layer 34 and hence is permitted to propagate in a forwards direction through the optical element 30. In the embodiment described with reference to Figures 3A and 3B, the optical element 30 can be described as 'open' or in an open state when at a normal operating temperature, because in this state the transmission of radiation is permitted to propagate between the seed lasers 21, 23 and the plasma formation region 4 via the optical element 30.

When heated, the temperature-sensitive layer 34 remains substantially transmissive for a range of temperatures. However, the temperature-sensitive layer 34 transitions to a different state above a threshold temperature. In particular, above the threshold temperature the temperature-sensitive layer 34 is optically reflective at the wavelength of the collinear laser beam 25. As discussed in more detail below, the threshold temperature can be selected based on the characteristics of the temperature-sensitive layer 34. The threshold temperature typically corresponds to a narrow interval of temperatures (e.g. a 2 °C or 5 °C interval) within which the optical properties of the temperature-sensitive layer 34 change significantly. Within this narrow temperature interval, for example, the reflectance can change from < 10% to > 90%. The threshold temperature is a value which represents the temperature interval. For example, the threshold temperature may be a central temperature in the interval, or another illustrative temperature within the interval.

Figure 3B depicts the optical element 30 at a temperature above the threshold temperature, wherein the temperature-sensitive layer 34 is reflective. In Figure 3B, the temperature-sensitive layer 34 is depicted by a hatched box, indicating that it is reflective at the wavelength of the collinear laser beam 25 above the threshold temperature. In this state, the back-reflections 200, which are propagating in a backwards direction through the laser system 1, are reflected by the temperature-sensitive layer 34 and are not permitted to be transmitted through the optical element 30. Therefore, the back-reflections 200 are not permitted to continue further, and hence enter, either of the seed lasers 21, 23 (or the pre-amplifier 26). In the embodiment described with reference to Figures 3A and 3B, the optical element 30 can be described as 'closed' or in a closed state when above the threshold temperature, because in this state the transmission of radiation is not permitted to propagate between the seed lasers 21, 23 and the plasma formation region 4 via the optical element 30.

The back-reflections 200 reflected by the temperature-sensitive layer 34 are subsequently blocked using a beam dump 36, such that their onward propagation is prohibited. It should be apparent to the skilled person that, additionally or alternatively to using a beam dump 36, other means of blocking the back-reflections 200 from onward propagation may be used.

The change in temperature of the temperature-sensitive layer 34 is responsive, at least in part, to absorption of the collinear laser beam 25 and/or the back-reflections 200. That is, the temperature sensitive layer 34 absorbs at least a small portion of the radiation incident upon it and hence heats up. Additionally or alternatively, the substrate 32 may absorb at least a small portion of the radiation incident upon it and hence heats up, and said heat is conducted towards the temperature-sensitive layer 34 resulting in the temperature-sensitive layer 34 heating up. In this way, heat is received, from the collinear laser beam 25 or back-reflections 200, by the substrate 32 and/or the temperature-sensitive layer 34, resulting in an increase in temperature of the temperature-sensitive layer 34. As discussed in more detail below, the heating rate can be controlled based on the characteristics of the temperature-sensitive layer 34 and/or substrate, for example their absorption at the wavelength of the collinear laser beam 25. The optical element 30 as depicted in Figures 3A and 3B represent a passive means of selectively blocking undesired radiation. The means are passive because the transition of the temperature-sensitive layer 34 between transmissive and reflective states is effected by processes which necessarily occur during regular operation of the laser system 1 i.e. the propagation of the collinear laser beam 25 and back-reflections 200.

The temperature-sensitive layer 34 is a thin film. That is, the temperature-sensitive layer is may have a thickness of, for example, tens of microns, microns, or less than a micron. In particular, the temperature-sensitive layer 34 is substantially thinner than the substrate 32.For example, the film (i.e. the temperature-sensitive layer 34) may be less than 100 nm in thickness. The heating of the temperature-sensitive layer 34, and hence its response time (i.e. time taken to transition), is fast, at least in part due to the thin nature of the film. That is, a small volume of film is being heated so it can reach a threshold temperature more quickly than a bulk optical element could. In particular, the temperature-sensitive layer 34 may have a transition time of less than a microsecond, at least partially due to it being a thin film.

The thickness of the temperature-sensitive layer 34 can be selected based upon the wavelength of the collinear laser beam 25. For example, the thickness may be selected to be between 0.5 and 10 times the wavelength of the collinear laser beam 25. For example, when using a laser with a wavelength of around 10 µm, the thickness of the temperature-sensitive layer 34 may be between 5 µm and 100 µm. When using a laser with a wavelength of around 1 µm, the thickness of the temperature-sensitive layer may be between 0.5 µm and 10 µm.

In Figures 3A-3B, the angle of incidence of the collinear laser beam 25 upon the optical element 30 is depicted as approximately 45 degrees, but the angle of incidence could have any value. It is preferable for the angle of incidence to be greater than 0 degrees, because 0 degrees could lead to additional undesirable back-reflections. In some example arrangements, the angle of incidence could be between 1 and 10 degrees, or between 10 and 30 degrees.

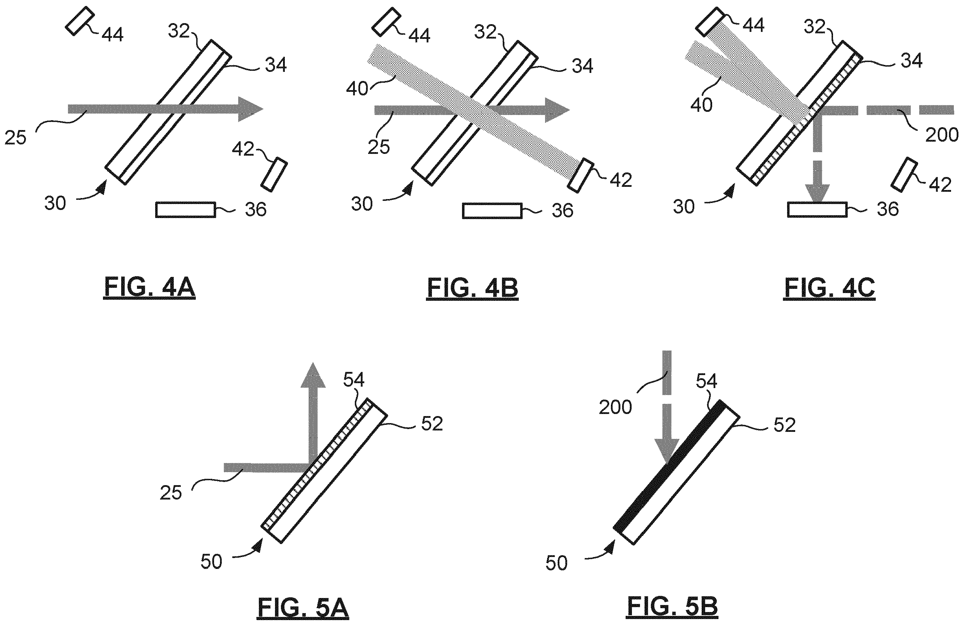

Figures 4A-4C depict the optical element 30 of Figures 3A and 3B used in an active embodiment. In this arrangement, a pump laser beam 40 is provided to the optical element 30. The pump laser beam is provided by a radiation source, for example by a pump laser (not shown). The pump laser may be referred to as a heating laser, and the radiation it generates may hence be referred to as heating radiation, a heating laser beam, pump radiation or a pump laser beam. The pump laser is separate to the seed lasers 21, 22. The temperature of the temperature-sensitive layer 34 may then be changed, at least in part, by absorption of the pump laser beam 40. The wavelength and power of the pump laser beam 40 can be selected, in combination with the characteristics of the temperature-sensitive layer 34 and/or substrate 32, so as to control the amount of heat energy absorbed and hence the rate of temperature increase of the temperature-sensitive layer 34. In this example, the pump laser beam 40 has a wavelength different to the wavelength of the collinear laser beam 25, although in different embodiments the pump laser beam 40 and the collinear laser beam 25 may have approximately the same wavelength. Having a pump laser beam 40 with a different wavelength to the wavelength of the collinear laser beam 25 is typically advantageous, because the pump laser beam 40 can be selected to have a wavelength at which the temperature-sensitive layer 34 is more strongly absorbing (e.g. > 50% absorbing). In this way, illuminating the optical element 30 with pump laser radiation enables a fast increase in temperature and hence a quick transition.

The pump laser beam 40 can be selectively provided, for example by switching the laser beam 40, e.g. using optical switching means in the pump laser or between the pump laser and the optical element 30. The pump laser providing the pump laser beam 40 may be a pulsed laser that is electrically triggered. In this way, the pump laser beam 40 and its associated heating effects can be provided selectively as desired and therefore the transition of the temperature-sensitive layer 34 between transmissive and reflective states can be actively selected. It should be understood that, in the active example depicted in Figures 4A-C, some heating will usually also be provided due to the incidence of the collinear laser beam 25 and back-reflections 200, in addition to heating provided by the pump laser beam 40.

Figure 4A depicts the optical element 30 when no pump laser beam 40 is provided. As such, little or no heating is experienced by the temperature-sensitive layer 34 which therefore remains in its transmissive state, allowing onward propagation of the collinear laser beam 25. In Figure 4A, the temperature-sensitive layer 34 is depicted by a white box, indicating that it is transmissive at the wavelength of the collinear laser beam 25 at the normal operating temperature.

Figure 4B depicts the optical element 30 when the pump laser beam 40 is provided. In this arrangement, the pump laser beam 40 is causing heating of the temperature-sensitive layer 34, but the temperature-sensitive layer 34 has not yet reached its threshold temperature and is therefore still transmissive. In particular, a pulse of the collinear laser beam 25 may be transmitted through the temperature-sensitive layer 34, causing some heating of the layer 34. The pump pulse (in the pump laser beam 40) is then provided which further heats the temperature-sensitive layer 34. However, only a portion of the pump pulse may have been transmitted through the temperature-sensitive layer 34 at the time shown in Figure 4A, such that while the layer 34 is being heated, it has not yet reached the threshold temperature. In Figure 4A, the temperature-sensitive layer 34 is depicted by a white box, indicating that it is transmissive at the wavelength of the collinear laser beam 25 while it is being heated but below the threshold temperature. A beam dump 42 is provided to block the pump laser beam 40 after it has been transmitted through the temperature-sensitive layer 34.

Figure 4C depicts the optical element 30 when the pump laser beam 40 is provided and has caused the temperature-sensitive layer 34 to increase in temperature to above the threshold temperature. As such, the temperature-sensitive layer 34 has transitioned to a state in which it is optically reflective at the wavelength of the collinear laser beam 25 and back-reflections 200. The layer 34 is still transmissive at the wavelength of the pump laser beam 40, which is different to the wavelength of the collinear laser beam 25. Therefore, back-reflections 200 are reflected and blocked by a beam dump 36 as described with reference to Figure 3B.

More generally, the optical element 30 described above with reference to Figures 3A-B and Figures 4A-C can be in a transmissive state, referred to as an open state, in which desired radiation is permitted to propagate, or a reflective state, referred to as a closed state, in which undesired radiation is blocked. The optical element 30 can therefore be referred to as a 'normally open' device in that, in normal operation at the normal operating temperature, it is in an open state and only transitions to a closed state when heated to above the threshold temperature.

An optical element can instead be selected so as to be a 'normally closed' device. Such a device is in a closed state at the normal operating temperature and transitions to an open state (when heated to above the threshold temperature. Such normally closed devices operate in much the same way as described for the normally open devices above, but can be actuated, for example using a pump laser beam, to transition to an open state as desired. In particular, the device can be normally closed so as to prohibit propagation of radiation (including PP radiation, MP radiation and back-reflections 200) between the seed lasers 21, 23 and the plasma formation region 4, but be provided with a pump laser beam prior to the arrival of desired radiation (e.g. a pulse of PP or MP radiation), thereby transitioning to an open state and permitting propagation of the desired radiation for a period of time.

Furthermore, the optical element 30 described above with reference to Figures 3A-B and Figures 4A-C is a typically transmissive optical element, for example a lens or an optical window. That is, in normal operation (i.e. when permitting propagation of desired radiation), the optical element 30 is transmissive and only transitions to a reflective state when blocking undesired radiation. Figures 5A and 5B, on the other hand, schematically illustrate an optical element 50 which is typically reflective. By typically reflective, it is meant that in normal operation (i.e. when permitting propagation of desired radiation), the optical element 50 is reflective and only transitions to a non-reflective state when blocking undesired radiation.

The optical element 50 comprises a substrate 52 and a temperature-sensitive layer 54. The invention can be implemented using a temperature-sensitive layer 54 without a substrate 52, but the use of a substrate may be beneficial for example to improve the strength and/or thermal properties of the optical element 50. The optical element 50 can be used, in the laser system 1 depicted in Figure 2, for example in place of the optical element 30. However, due to the typically reflective nature of the optical element 50 as described in more detail below, the optical element 50 alters the beam path of the collinear laser beam 25 and hence a different arrangement of components will be required.

The temperature-sensitive layer 54 is optically reflective at the wavelength of the collinear laser beam 25 when operating at a normal operating temperature, for example room temperature. When heated above a threshold temperature, the temperature-sensitive layer 54 transitions to an absorptive state in which radiation at the wavelength of the collinear laser beam 25 is strongly absorbed by the temperature-sensitive layer. Figure 5A depicts the optical element 50 at normal operating temperature, wherein the temperature-sensitive layer 54 is reflective and hence the optical element 50 is in an open state. In this open state, the collinear laser beam 25 is reflected by the temperature-sensitive layer 54 and propagates onwards within the laser system towards a droplet in the radiation source. Figure 5B depicts the optical element 50 at a temperature above the threshold temperature, wherein the temperature-sensitive layer 54 has transitioned to an absorptive state and hence the optical element 50 is in a closed state. In this closed state, back-reflections 200 are strongly absorbed by the temperature-sensitive layer 54 and hence are prohibited from propagating backwards towards, for example, a seed laser.

The transition of the temperature-sensitive layer 54 can be actuated using passive or active means as described above with reference to Figures 3A-B and Figures 4A-C. Additionally, while the optical element 50 depicted in Figures 5A-B is a normally open device, the device may also be implemented as a normally closed device in a similar manner to that described above with reference to Figures 3A-B and Figures 4A-C.

More generally, the optical elements described above can be summarized as follows. The optical elements comprise a temperature-sensitive coating which can transition between an open and a closed state, depending on the temperature of the temperature-sensitive coating. In the open state, desired radiation is permitted to propagate between a source of the desired radiation (e.g. seed lasers) to a source of back-reflections (e.g. a droplet at the plasma formation region) via the optical element. In the closed state, undesired radiation is prohibited from propagating between a source of the desired radiation (e.g. seed lasers) to a source of back-reflections (e.g. a droplet at the plasma formation region) via the optical element. Via the optical element includes any interaction between the radiation and the optical element, for example transmission, reflection or absorption. In the open state, the temperature-sensitive layer is one of reflective or non-reflective (non-reflective being transmissive or absorptive). In the closed state, the temperature-sensitive layer is the other of reflective or non-reflective (non-reflective being transmissive or absorptive). For example, the temperature-sensitive layer may have the following properties and arrangements:

In a first arrangement, the temperature-sensitive layer is transmissive at a first wavelength (i.e. the wavelength of the desired radiation from a seed laser) below the threshold temperature and arranged to permit propagation of radiation of the first wavelength between a seed laser and a source of back-reflections, by allowing transmission of said radiation along a beam path between the seed laser and the source of back-reflections. In the first arrangement, the temperature-sensitive layer is reflective at the first wavelength above the threshold temperature and is arranged to direct radiation from the seed laser and/or from the source of back-reflections to a means for blocking the radiation, e.g. a beam dump, by reflecting radiation to said means. In the first arrangement, the first state (below the threshold temperature) is an open state and the second state (above the threshold temperature) is a closed state.

In a second arrangement, the temperature-sensitive layer is reflective at the first wavelength below the threshold temperature and arranged to permit propagation of radiation of the first wavelength between a seed laser and a source of back-reflections, by allowing reflection of said radiation along a beam path between the seed laser and the source of back-reflections. In the second arrangement, the temperature-sensitive layer is transmissive at the first wavelength above the threshold temperature and is arranged to permit transmission of radiation from the seed laser and/or from the source of back-reflections. A beam dump is positioned to block onwards propagation of the transmitted radiation such that the transmitted radiation from one of the seed laser or the source of back-reflections cannot propagate towards the other of the seed laser or the source of back-reflections. In the second arrangement, the first state (below the threshold temperature) is an open state and the second state (above the threshold temperature) is a closed state.

In a third arrangement, the temperature-sensitive layer is transmissive at the first wavelength below the threshold temperature and arranged to permit transmission of radiation of the first wavelength through the optical element. A beam dump is positioned to block onwards propagation of the transmitted radiation such that the transmitted radiation from one of the seed laser or the source of back-reflections cannot propagate towards the other of the seed laser or the source of back-reflections. In the third arrangement, the temperature-sensitive layer is reflective at the first wavelength above the threshold temperature and is arranged to permit propagation of radiation of the first wavelength between the seed laser and the source of back-reflections, by allowing reflection of said radiation along a beam path between the seed laser and the source of back-reflections. In the third arrangement, the first state (below the threshold temperature) is a closed state and the second state (above the threshold temperature) is an open state.

In a fourth arrangement, the temperature-sensitive layer is reflective at the first wavelength below the threshold temperature and is arranged to direct radiation from the seed laser and/or from the source of back-reflections to a means for blocking the radiation, e.g. a beam dump, by reflecting radiation to said means. In the fourth arrangement, the temperature-sensitive layer is transmissive at the first wavelength above the threshold temperature and arranged to permit propagation of radiation of the first wavelength between a seed laser and a source of back-reflections, by allowing transmission of said radiation along a beam path between the seed laser and the source of back-reflections. In the fourth arrangement, the first state (below the threshold temperature) is a closed state and the second state (above the threshold temperature) is an open state.

In a fifth arrangement, the temperature-sensitive layer is reflective at the first wavelength below the threshold temperature and is arranged to permit propagation of radiation of the first wavelength between a seed laser and a source of back-reflections, by allowing reflection of said radiation along a beam path between the seed laser and the source of back-reflections. In the fifth arrangement, the temperature-sensitive layer is absorptive at the first wavelength above the threshold temperature. As such, radiation of the first wavelength is not permitted to propagate between the seed laser and the source of back-reflections, because it is absorbed by the temperature-sensitive layer. In the fifth arrangement, the first state (below the threshold temperature) is an open state and the second state (above the threshold temperature) is a closed state.

In a sixth arrangement, the temperature-sensitive layer is absorptive at the first wavelength below the threshold temperature. As such, radiation of the first wavelength is not permitted to propagate between the seed laser and the source of back-reflections, because it is absorbed by the temperature-sensitive layer. In the sixth arrangement, the temperature-sensitive layer is reflective above the threshold temperature and is arranged to permit propagation of radiation of the first wavelength between a seed laser and a source of back-reflections, by allowing reflection of said radiation along a beam path between the seed laser and the source of back-reflections. In the fifth arrangement, the first state (below the threshold temperature) is a closed state and the second state (above the threshold temperature) is an open state.

The timing of the switching between open and closed states is important so as to enable desired radiation to propagate and prohibiting undesired radiation from propagating. Consider, for example, a laser system with seed lasers with a pulse repetition rate of 300 kHz and a pulse length of 40 ns. The PP may arrive at the temperature-sensitive layer at a particular time, nominally designated 0 ns. As described in Figure 2, the PP then travels through an amplification chain and to the droplet, and a back-reflection 200 travels backwards through the amplification chain before returning to the optical element. As such, there is a temporal delay between the passage of the PP through the optical element and the arrival of the back-reflection at the optical element. The delay is typically fast, i.e. less than a microsecond. The delay may be, for example, 400 ns. As such, it is desirable for the temperature-sensitive layer 34 to be open (i.e. be in the open state) at 0 ns and for the duration of the PP (i.e. 40 ns), and transition to a closed state before the back-reflection arrives (i.e. before 400 ns). It is therefore desirable for the temperature-sensitive layer to transition on a fast timescale. As described below, using a thin multi-layer film as described herein, for example comprising sub-layers of comparatively high and low refractive index materials, enables such fast transitions.

Furthermore, the temperature-sensitive layer can be designed so as to transition back to the open state prior to the arrival of the next pulse of desired radiation. For example, the MP can arrive at the temperature-sensitive layer delayed with respect to the PP, for example by 4 µs. As such, it is desirable for the temperature-sensitive layer to be open around 4 µs so as to permit propagation of the MP. A further back-reflection associated with the MP will arrive at 4.4 µs (i.e. 400 ns following the MP), at which point it is desirable for the temperature-sensitive layer to have transitioned back to a closed state so as to block the undesired back-reflection. The temperature-sensitive layer may then transition back to an open state prior to the arrival of the next PP, for example at 10 µs. In this way, the optical element permits propagation of the desired radiation and quickly transitions between open and closed states so as to block undesired radiation in a timely manner.

An example temperature-sensitive layer comprises alternative sub-layers of thorium tetrafluoride (ThF₄) and zinc selenide (ZnSe). ThF₄ and ZnSe have distinctly different refractive indices, such that a stack of alternating sub-layers of these materials forms a thin film of alternating high and low refractive index sub-layers. A thin layer of this composition and arrangement is capable of withstanding high powers of radiation (e.g. in excess of 30 kW) without becoming damaged, so is suitable for use in blocking high powers of radiation. Furthermore, the optical properties of a ThF₄ and ZnSe multilayer stack are affected by changing its temperature.

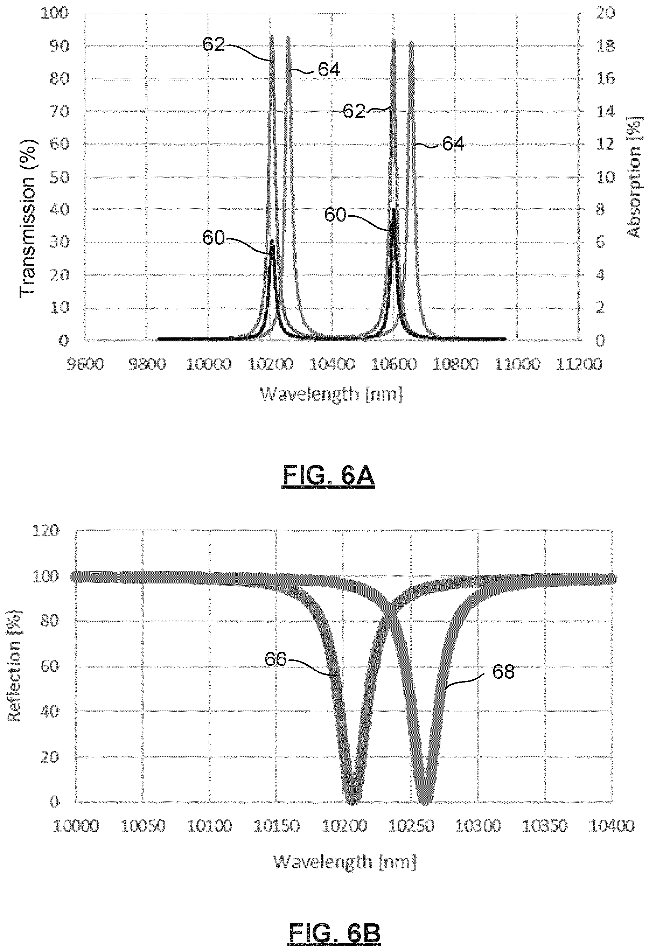

Figures 6A and 6B depict optical spectra of a temperature-sensitive layer comprising a 50 µm layer comprising ThF₄ and ZnSe sub-layers. In particular, Figure 6A shows the absorption spectrum 60 for the temperature-sensitive layer at room temperature, the transmission spectrum at room temperature 62 and the transmission spectrum at 120 °C 64. The absorption spectrum 60 consists of a double peak, with low absorption for most wavelengths but a first peak of absorption 10207 nm (with an absorption of around 6%) and a second peak in absorption around 10600 nm (with an absorption of around 8%). The transmission spectrum at room temperature 62 exhibits a double peak, with low transmission for most wavelengths but a first peak in transmission 10207 nm (with a transmittance of around 94%) and a second peak in transmission around 10600 nm (with a transmittance of around 92%). The transmission spectrum at 120 °C 64 also exhibits a double peak similar to the transmission spectrum at room temperature 62, but shifted by 60 nm to longer wavelengths. That is, the transmission spectrum at 120 °C 64 has a first peak at 10267 nm (with a transmittance of around 94%) and a second peak in transmission around 10660 nm (with a transmittance of around 92%). More importantly, the transmission at 120 °C is significantly reduced at 10207 and around 10600 nm, with a transmittance of less than 5% at these wavelengths. As such, a temperature-sensitive layer comprising a 50 µm layer of ThF₄ and ZnSe sub-layers can transition from a first state at room temperature, in which the layer is substantially transmissive at 10207 nm and 10600 nm, to a second state at 120 °C, in which the layer is substantially non-transmissive. As such, if the MP and/or PP have a wavelength of 10207 nm or 10600 nm, the propagation (or blocking) of pulses and their back-reflections can be controlled using this temperature-sensitive layer. This transition can be affected by the absorption of said MP and/or PP radiation, given that the layer absorbs at these critical wavelengths. Alternatively, a pump laser beam can be provided at a wavelength at which the temperature-sensitive layer is absorptive, which may for example be outside of the window depicted in Figures 6A and 6B.

Figure 6B depicts the reflectivity spectrum 66 at room temperature and the reflectivity spectrum 68 at 120 °C for the temperature-sensitive layer comprising a 50 µm layer of ThF₄ and ZnSe sub-layers. The reflectivity spectra 66, 68 are only shown in the vicinity of 10200 nm. The reflectivity at room temperature is typically 100%, but drops to approximately 0% at 10207 nm. Similarly, the reflectivity at 120 °C is typically 100% but drops to approximately 0% at around 10267 nm. Considering the reflectivity at 10207 nm, the reflectivity is approximately 0% at room temperature (as is shown in first reflectivity spectrum 66) but transitions to approximately 97% at 120 °C (as is shown in second reflectivity spectrum 68). In this way, by heating the temperature-sensitive layer to 120 °C, the layer transitions from being non-reflective to reflective.

Considering the transmissive, absorptive and reflective properties of the layer, it can be seen that the layer can absorb laser beam radiation at around 10207 nm leading to an increase in temperature. When heated to 120°C, the layer transitions from being substantially transmissive at 10207 nm to being substantially reflective at 10207 nm. As such, the layer can transition between an open and a closed state as described above. The temperature-sensitive layer comprising a 50 µm layer of ThF₄ and ZnSe sub-layers is particularly useful when used in combination with a CO2 laser (e.g. as the MP and/or PP seed lasers), which may emit at 10207 nm. Alternatively it can be used in combination with any laser which emits at around 10207 nm. Additionally, the temperature-sensitive layer can be designed to work at multiple wavelengths, for example two or more wavelengths. As exemplified by the double peak spectra in Figure 6A, a temperature-sensitive layer comprising sub-layers of ThF₄ and ZnSe exhibits a switching (e.g. between reflection and non-reflection) of optical properties at both 10207 nm and 10600 nm. Using other arrangements and compositions of sub-layers, different wavelengths may be switched. This may be of particular use when the MP and PP radiation have different wavelengths. In this instance, the MP will have a main pulse wavelength, the PP will have a PP wavelength, and the temperature-sensitive layer will be configured to transition between a first state, in which it is open to the MP and PP wavelengths, and a second state, in which it is closed to the MP and PP wavelengths.

The transition from the transmissive state to reflective state in a temperature-sensitive layer comprising a 50 µm layer of ThF4 is particularly fast, occurring in under 100 ns, e.g. 70 ns in response to a 4 mJ pulse of radiation. As such, this temperature-sensitive layer can provide the fast transitions required to block back-reflections.

The optical response of a temperature-sensitive layer can be selected based upon its composition and/or its structure and/or the angle of incidence between incident radiation and the layer. For example, by changing the layer thickness (and/or sub-layer thicknesses) of a temperature-sensitive layer comprising sub-layers of ThF₄ and ZnSe, the peaks of absorption, transmission and reflectivity can be shifted to a desired value. For example, a temperature-sensitive layer comprising a 30 µm layer of ThF₄ and ZnSe sub-layersis substantially reflective at 10207 nm at room temperature and substantially transmissive at 10207 nm at 120 °C. It has been found that a temperature-sensitive layer comprising sub-layers of ThF₄ and ZnSe can be produced with a range of layer thicknesses, for example up to a micron, while providing fast transition times and resilience to radiation damage. It has been found that layer thicknesses of ThF₄/ZnSeof less than 100 µm are particularly suitable when used with CO2 lasers because their spectral features are located around the emission wavelength of a CO2 laser. Furthermore, and as described above, the layer thickness may be selected based on the wavelength of radiation. For example, the layer thickness may be less than 10 times the wavelength of radiation.

Other materials may be used to form the temperature-sensitive layer. In particular, any mix of two or more comparatively high and low refractive index materials may be used. The low index material may comprise a fluoride, for example thorium fluoride (ThFx, for example thorium tetrafluoride ThF4), ytterbium fluoride (YbFx), barium fluoride (BaFx). The high index material may comprise, for example, zinc selenide (ZnSe), zinc sulfide (ZnS), diamond, silicon (Si), germanium (Ge). These lists are not intended to be exhaustive and any other combination of high and low index materials may be used. Furthermore, either or both of the materials may be doped.

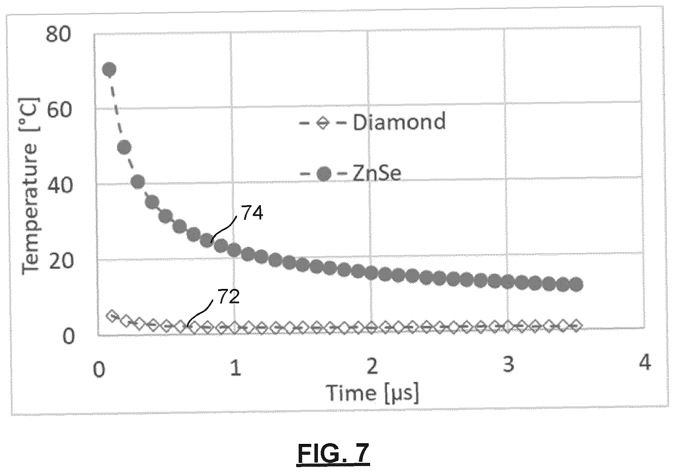

The use of, and selection of, a substrate can further aid the transition properties of the temperature-sensitive layer. Figure 7 depicts the temperature change of a 30 µm layer of ThF₄/ZnSe sub-layers of on different substrates following illumination by a pulse of laser beam radiation. A first curve 72 shows the temperature of the layer on a diamond substrate. A second curve 74 shows the temperature of the layer on a ZnSe substrate. In both cases, the layer is illuminated with a 4 mJ pulse of PP radiation at 0 µs, and the temperature is shown from a maximum value which occurs at around 100 ns and subsequently decreases over 3.5 µs. The temperatures are shown relative to the normal operating temperature, which in this case is room temperature, such that a temperature measurement of 0 °C corresponds to an actual temperature of 20 °C.

In the first case, where the substrate comprises diamond as illustrated by the first curve 72, a temperature increase of around 5 °C is achieved around 100 ns. The temperature then rapidly decreases such that, within approximately 300 ns, the temperature-sensitive layer is substantially at the normal operating temperature. Alternatively, in the second case, where the substrate comprises ZnSe as illustrated by the second curve 74, a temperature increase of around 70 °C is achieved around 100 ns. The temperature then decreases, but over a longer timescale compared to the first curve 72. As such, by using a substrate comprising ZnSe, a larger increase in temperature may be achieved, thereby enabling the temperature-sensitive layer to reach (and potentially surpass) the threshold temperature more quickly and/or with reduced input laser power.

A range of materials may be used for the substrate which have beneficial thermal properties similar to ZnSe. In particular, ZnSe has a relatively low thermal conductivity (compared to the temperature-sensitive layer). Other materials with a low thermal conductivity may be used. For example, the substrate may comprise germanium, a barium salt, silicon, etc.

In order to control the time period in which the temperature-sensitive layer transitions from a high-temperature state (i.e. above the threshold temperature) to a low-temperature state (i.e. below the threshold temperature), additional cooling means can be provided to the optical element. For example, the optical element may have a cooling fluid, such as water, configured to run through a portion thereof, for example through the substrate. In this way, by providing a cooling fluid, the temperature-sensitive layer may cool faster and hence transition faster. Alternative means of cooling may be provided, for example gas flow to the temperature-sensitive layer. The substrate may be thermally connected to a heat sink.

The optical element may be provided with additional heating means, for example a Peltier heater. Such heating means may ensure that the temperature-sensitive layer is at a desired temperature (e.g. a consistent normal operating temperature) upon arrival of laser radiation. In this way, a more consistent increase in temperature can be achieved upon receipt of the laser radiation.

As described above, the timing of the transition upon heating the temperature-sensitive layer to above the threshold temperature can be controlled using active or passive means. In the passive case, the transition depends on the power imparted by incident radiation (e.g. MP, PP and/or back-reflections) to the temperature-sensitive layer. In the active case, the transition primarily depends on the power imparted by the pump laser beam. As such, the timing of the pump laser beam can control the timing of the transition. As also described above, it is typically desirable to allow propagation of the MP or PP via the optical element before transitioning the temperature-sensitive layer to a closed state. Therefore, if actively controlling the temperature-sensitive layer, the pump laser beam can be provided during or after the arrival of the relevant MP or PP. In this way, heating begins during or after propagation of the desired radiation, and the temperature-sensitive layer will not transition to its closed state until the MP or PP has been permitted to propagate past the optical element. The pump laser beam may also be a pulsed laser beam timed to repeat with the same repetition rate as the MP and/or PP beams. In this way, the pump laser beam may be provided with a specific timing each time a MP or PP passes through the optical element, such that a corresponding back-reflection from each pulse is blocked.

The optical element 30 in Figure 2 is shown as being positioned after the pre-amplifier 26 and the amplification chain 28. That is, an optical element can be positioned after the pre-amplifier 26 and the amplification chain 28. However, an optical element can alternatively be positioned anywhere within the laser system 1 between the seed lasers 21, 23 and the plasma formation region 4. For example, the optical element may be positioned after the amplification chain 28 (i.e. between the amplification chain 28 and the plasma formation region 4). Alternatively, the optical element may be positioned between amplifiers PA0-3 of the amplification chain 28. For example, the optical element may be positioned between the first and second amplifiers PA0, PA1. In such arrangements, the time delay between the passage of the pulse of laser radiation (e.g. MP or PP) and the arrival of a back-reflection will be different, due to the different distance travelled by the pulses of radiation. For example, an optical element located between the first and second amplifiers PA0, PA1 may receive a back-reflection delayed by approximately 200 ns compared to the arrival of the main pulse. For example, an optical element located after the amplification chain 28 may receive a back-reflection delayed by approximately 100 ns compared to the arrival of the main pulse. As such, the transition timings of the temperature-sensitive layer 34 can be selected to correspond to the arrival times of the pulse and back-reflections.

Specific reference has been made herein to blocking or permitting propagation of radiation with a wavelength of around 10.2 µm or 10.6 µm, which are, for example, possible emission wavelengths of a CO₂ laser. However, the disclosure herein can be used with other wavelengths, and especially wavelengths in the infra-red range (e.g. in the range 700 nm to 1 mm). Furthermore, the examples herein are described with the MP radiation and PP radiation having the same wavelength. However, in other embodiments one or more of the laser systems may have a different wavelength. For example, the PP radiation and/or pump laser beam may have a different wavelength than the MP radiation, for example the MP radiation may have a wavelength of 10.2 µm and the PP radiation may have a wavelength of 10.6 µm or 1 µm. The wavelength of the PP radiation may be referred to as a first wavelength. The wavelength of the pump laser radiation may be referred to as a second wavelength. The wavelength of the MP radiation may be referred to as a third wavelength, which may be the same as the first wavelength or may be different. As it shown above, other examples may not comprise the pump laser radiation and there may be only PP laser radiation and MP laser radiation. Therefore, the wavelength of the PP laser radiation may be the first wavelength and the wavelength of the MP laser radiation maybe the second wavelength. Alternatively, other examples may only have a MP laser radiation. Therefore, the wavelength of the MP laser radiation may be the first wavelength. Alternatively, other examples may only have a MP laser radiation and the pump laser radiation. Therefore, the wavelength of the MP radiation may be referred to as a first wavelength. The wavelength of the pump laser radiation may be referred to as a second wavelength. Alternatively, other examples may only have a PP laser radiation and the pump laser radiation. Therefore, the wavelength of the PP radiation may be referred to as a first wavelength. The wavelength of the pump laser radiation may be referred to as a second wavelength.

The laser system 1 of Figure 2 is shown with the components arranged in a linear arrangement (i.e. in a straight line), but in practice may have a different arrangement. For example, the seed laser system 1 may have a folded arrangement so as to limit the linear size of the system 1. Furthermore, the laser system 1 may comprise additional optical elements, for example one or more of: electro-optic modulators, acousto-optic modulators, or any other optical elements which may be used for shaping, modulating, delaying, or otherwise modifying pulses in a laser beam. Said additional optical elements may be located between the amplification chain 28 and the output of the laser system 1, such that the output of the amplification chain 28 comprises an intermediate laser beam which is further modulated to form the laser beam 2. Furthermore, while the amplification chain 28 illustrated in Figure 2 comprises four amplifiers PA0-3, any number of amplifiers may be used.

Specific examples of optical elements are described herein. However, the features of each described optical element may be combined where appropriate. For example, an optical element may be any combination of: mirror or lens, active or passive, normally open or normally closed, whether said combination is explicitly described herein or not.

The embodiments herein are described with reference to permitting propagation of a collinear laser beam which may be either MP or PP radiation. However, the embodiments are equally applicable to any other type of laser beam radiation. For example, the PP and MP laser beams 22, 24 may be directed to form a generally collinear combined laser beam using various optical elements (not shown in figure 2). Therefore, the temperature sensitive layer may receive radiation from a laser beam comprising only one type of pulsed radiation, or additional pulses or a new combined beam from two or more different source of radiation. In a specific example, the collinear laser beam comprises MP radiation, PP radiation, and a third pulse referred to as a pedestal pulse or rarefication pulse. In another example, the collinear laser beam comprises only MP radiation. In another example, the collinear laser beam comprises only PP radiation. In another example, the collinear laser beam comprises only pedestal pulse radiation.

Reference is made herein to the temperature-sensitive layer being transmissive, absorptive or reflective. It should be understood that, with real materials, 100% absorption, transmission or reflection is typically not achievable. Therefore, each of transmissive, absorptive and reflective should be interpreted as substantially transmissive, substantially absorptive and substantially reflective. Substantially may indicate that the majority (i.e. >50%) of radiation is transmitted, absorbed or reflected. Preferably, a substantially transmissive, absorptive or reflective will transmit, absorb or reflect more than 90% of incident radiation, respectively.

Furthermore, reference is made herein to the state of the temperature-sensitive layer transitioning above a threshold temperature. It should be understood that material properties typically change slowly with temperature, such that heating a temperature-sensitive layer may result in a small increase in, for example, reflectivity. However, the examples described herein refer to temperature-sensitive layers which exhibit a large change in optical properties within a narrow temperature interval. As such, while being heated, the temperature-sensitive layer may experience small changes in optical properties below the threshold temperature, but experiences significant changes in optical properties close to and at the threshold temperature. For example, the temperature-sensitive layer with a threshold temperature of 60°C may experience a change in reflectivity from 0% to 5% reflectivity between a temperature of 20°C and 59°C, and experience a change in reflectivity from 5% to 95% between a temperature of 59 °C and 61 °C. The large change in reflectivity at the threshold temperature is indicative of a change of state and hence is referred to as a transition.

The term non-reflective as referred to herein may comprise either absorptive or transmissive. As such, a temperature-sensitive layer which transitions between a transmissive state and a reflective state can be construed as transitioning between a non-reflective and a reflective state.

Reference is made herein to an optical element being in an open state or a closed state. The state in which laser beam radiation is permitted to propagate between the laser and the other point via the optical element can be referred to as an 'open' state. The state in which laser beam radiation is not permitted to propagate between the laser and the other point via the optical element may be referred to as a 'closed' state. It should be understood that the arrangement of the optical element within a larger optical system, and with respect to other elements of the optical system, may contribute to an optical element being 'open' or 'closed'. For example, an optical element may be in a closed state when the radiation interacting with it is directed to a beam dump, and open when radiation interacting with it is directed to/from the seed lasers.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Where the context allows, embodiments of the invention may be implemented in hardware, firmware, software, or any combination thereof. Embodiments of the invention may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic storage media; optical storage media; flash memory devices; electrical, optical, acoustical or other forms of propagated signals (e.g. carrier waves, infrared signals, digital signals, etc.), and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc. and in doing that may cause actuators or other devices to interact with the physical world.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the clauses set out below.

Clauses:
1. An optical element comprising a temperature-sensitive layer, the temperature-sensitive layer configured to:
   increase in temperature, due to heat received from a laser beam; and
   transition from a first state to a second state at or above a threshold temperature, wherein:
      in the first state, the temperature-sensitive layer is substantially reflective at a first wavelength and in the second state the temperature-sensitive layer is substantially non-reflective at the first wavelength; or
      in the first state, the temperature-sensitive layer is substantially non-reflective at the first wavelength and in the second state the temperature-sensitive layer is substantially reflective at the first wavelength; and
      the transition from the first state to the second state occurs over less than a microsecond.
2. The optical element of clause 1, wherein the received laser beam comprises laser beam radiation of the first wavelength and the increase in temperature is due to the laser beam radiation of the first wavelength.
3. The optical element of clause 1 or 2, wherein the received laser beam comprises laser beam radiation of a second wavelength and the increase in temperature is due to the laser beam radiation of the second wavelength.
4. The optical element of any preceding clause, wherein the laser beam is suitable for converting a target into a plasma upon illuminating the target.
5. The optical element of any preceding clause, wherein the first wavelength is in the infra-red range.
6. The optical element of clause 5, wherein the first wavelength is in the long infra-red range.
7. The optical element of any preceding clause, wherein the received laser beam has a power greater than 1 kW.
8. The optical element of any preceding clause, wherein the temperature-sensitive layer comprises alternating layers of high and low refractive index media.
9. The optical element of any preceding clause, wherein the temperature-sensitive layer has a thickness of less than 100 micron.
10. The optical element of any preceding clause, wherein one of the first state or second state is substantially reflective and the other of the first state or second state is substantially transmissive.
11. The optical element of any of clauses 1 to 9, wherein one of the first state or second state is substantially reflective and the other of the first state or second state is substantially absorptive.
12. The optical element of any preceding clause, wherein the temperature-sensitive layer is further configured to, following the transition from the first state to the second state, remain in the second state for at least a microsecond before returning to the first state.
13. The optical element of any preceding clause, further comprising a substrate supporting the temperature-sensitive layer.
14. The optical element of clause 13, wherein the substrate has a thermal conductivity lower than the thermal conductivity of the temperature-sensitive layer.
15. The optical element of clause 14, wherein the substrate comprises zinc selenide.
16. The optical element of any preceding clause, wherein the threshold temperature is more than 20 °C above a normal operating temperature of the optical element.
17. The optical element of any preceding clause, wherein the threshold temperature is less than or equal to 100 °C above the normal operating temperature of the optical element.
18. A thermo-optical switching apparatus comprising:
   the optical element of clause 3 or any clause dependent thereon; and
   a heating laser configured to illuminate the temperature-sensitive layer with laser beam radiation of the second wavelength.
19. The thermo-optical switching apparatus of clause 18, wherein:
   the heating laser generates pulsed radiation;
   the laser beam radiation of the first wavelength comprises pulsed radiation generated by a seed laser; and
   the heating laser and seed laser are synchronized.
20. A thermo-optical switching apparatus comprising:
   the optical element of any of clauses 1 to 17; and
   means for cooling or heating the temperature-sensitive layer.
21. An EUV source comprising the optical element of any of clauses 1 to 17 or the thermo-optical switching apparatus of any of clauses 18 to 20.
22. A method of selectively permitting and/or blocking radiation of a first wavelength comprising:
   providing an optical element comprising a temperature-sensitive layer in the path of said radiation of the first wavelength, wherein the temperature-sensitive layer is configured to transition from a first state to a second state at or above a threshold temperature, wherein the transition occurs over less than a microsecond, wherein:
      in the first state, the temperature-sensitive layer is substantially reflective at the first wavelength and in the second state the temperature-sensitive layer is substantially non-reflective at the first wavelength; or
      in the first state, the temperature-sensitive layer is substantially non-reflective at the first wavelength and in the second state the temperature-sensitive layer is substantially reflective at the first wavelength;
   illuminating the optical element with laser beam radiation; and
   increasing the temperature of the temperature-sensitive layer to above the threshold temperature.
23. The method of clause 22, wherein the optical element is provided in an EUV radiation source, the method further comprising:
   generating a pulse of laser beam radiation of the first wavelength in the EUV radiation source;
   directing the pulse of laser beam radiation of the first wavelength to the optical element; and
   increasing the temperature of the temperature-sensitive layer during and/or following the pulse of laser beam radiation of the first wavelength interacting with the optical element.
24. The method of clause 23, further comprising:
   generating a pulse of laser beam radiation of a second wavelength in the EUV radiation source; and
   directing the pulse of laser beam radiation of a second wavelength to the optical element during and/or following the pulse of laser beam radiation of the first wavelength interacting with the optical element.

## Claims

1. An optical element comprising a temperature-sensitive layer, the temperature-sensitive layer configured to:
increase in temperature, due to heat received from a laser beam; and
transition from a first state to a second state at or above a threshold temperature, wherein:
in the first state, the temperature-sensitive layer is substantially reflective at a first wavelength and in the second state the temperature-sensitive layer is substantially non-reflective at the first wavelength; or
in the first state, the temperature-sensitive layer is substantially non-reflective at the first wavelength and in the second state the temperature-sensitive layer is substantially reflective at the first wavelength; and
the transition from the first state to the second state occurs over less than a microsecond.

2. The optical element of claim 1, wherein the received laser beam comprises laser beam radiation of the first wavelength and the increase in temperature is due to the laser beam radiation of the first wavelength.

3. The optical element of claim 1 or 2, wherein the received laser beam comprises laser beam radiation of a second wavelength and the increase in temperature is due to the laser beam radiation of the second wavelength.

4. The optical element of any preceding claim, wherein the laser beam is suitable for converting a target into a plasma upon illuminating the target.

5. The optical element of any preceding claim, wherein the temperature-sensitive layer comprises alternating layers of high and low refractive index media.

6. The optical element of any preceding claim, wherein one of the first state or second state is substantially reflective and the other of the first state or second state is substantially transmissive, or wherein one of the first state or second state is substantially reflective and the other of the first state or second state is substantially absorptive.

7. The optical element of any preceding claim, wherein the temperature-sensitive layer is further configured to, following the transition from the first state to the second state, remain in the second state for at least a microsecond before returning to the first state.

8. The optical element of any preceding claim, further comprising a substrate supporting the temperature-sensitive layer, wherein the substrate has a thermal conductivity lower than the thermal conductivity of the temperature-sensitive layer.

9. The optical element of any preceding claim, wherein the threshold temperature is more than 20 °C above a normal operating temperature of the optical element.

10. The optical element of any preceding claim, wherein the threshold temperature is less than or equal to 100 °C above the normal operating temperature of the optical element.

11. A thermo-optical switching apparatus comprising:
the optical element of claim 3 or any claim dependent thereon; and
a heating laser configured to illuminate the temperature-sensitive layer with laser beam radiation of the second wavelength,
wherein:
the heating laser generates pulsed radiation;
the laser beam radiation of the first wavelength comprises pulsed radiation generated by a seed laser; and
the heating laser and seed laser are synchronized.

12. A thermo-optical switching apparatus comprising:
the optical element of any of claims 1 to 10; and
means for cooling or heating the temperature-sensitive layer.

13. An EUV source comprising the optical element of any of claims 1 to 10 or the thermo-optical switching apparatus of any of claims 11 or 12.

14. A method of selectively permitting and/or blocking radiation of a first wavelength comprising:
providing an optical element comprising a temperature-sensitive layer in the path of said radiation of the first wavelength, wherein the temperature-sensitive layer is configured to transition from a first state to a second state at or above a threshold temperature, wherein the transition occurs over less than a microsecond, wherein:
in the first state, the temperature-sensitive layer is substantially reflective at the first wavelength and in the second state the temperature-sensitive layer is substantially non-reflective at the first wavelength; or
in the first state, the temperature-sensitive layer is substantially non-reflective at the first wavelength and in the second state the temperature-sensitive layer is substantially reflective at the first wavelength;
illuminating the optical element with laser beam radiation; and
increasing the temperature of the temperature-sensitive layer to above the threshold temperature.

15. The method of claim 14, wherein the optical element is provided in an EUV radiation source, the method further comprising:
generating a pulse of laser beam radiation of the first wavelength in the EUV radiation source;
directing the pulse of laser beam radiation of the first wavelength to the optical element;
increasing the temperature of the temperature-sensitive layer during and/or following the pulse of laser beam radiation of the first wavelength interacting with the optical element,
generating a pulse of laser beam radiation of a second wavelength in the EUV radiation source; and
directing the pulse of laser beam radiation of a second wavelength to the optical element during and/or following the pulse of laser beam radiation of the first wavelength interacting with the optical element.
